# EUROPÄISCHE PATENTANMELDUNG

(11) **EP 3 640 089 A1**
(43) Veröffentlichungstag der Anmeldung: **22.04.2020**
(21) Anmeldenummer: 18200418.4
(22) Anmeldetag: 15.10.2018
(51) Int. Cl.: B60Q 1/50, B60Q 1/00

(54) **KRAFTFAHRZEUG**

(71) Anmelder: ZKW Group GmbH, 3250 Wieselburg (AT)
(72) Erfinder: Riesenhuber, Michael, 3254 Bergland (AT)
(74) Vertreter: Patentanwaltskanzlei Matschnig & Forsthuber OG

(57) **Zusammenfassung**

Kraftfahrzeug (1), welches in einem selbstfahrenden Zustand betreibbar ist, wobei das Kraftfahrzeug (1) ein adaptives Beleuchtungssystem (10) zum Erzeugen von adaptiven Lichtsignalbotschaften an einzelne Verkehrsteilnehmer (20) umfasst, welches Beleuchtungssystem (10) zumindest einen Leuchtstreifen (11) mit Leuchtdioden und eine Steuereinrichtung, mit welcher die Leuchtdioden ansteuerbar sind, umfasst, wobei der zumindest eine Leuchtstreifen (11) horizontal umlaufend um das Kraftfahrzeug (1) angeordnet ist, wobei der zumindest eine Leuchtstreifen (1) bei Einschaltung jeder Leuchtdiode des zumindest einen Leuchtstreifens (11) als optisch durchgehend leuchtender Leuchtring wahrnehmbar ist.

## Beschreibung

Die Erfindung betrifft ein Kraftfahrzeug, welches in einem selbstfahrenden Zustand betreibbar ist, wobei das Kraftfahrzeug ein adaptives Beleuchtungssystem zum Erzeugen von adaptiven Lichtsignalbotschaften an einzelne Verkehrsteilnehmer umfasst, welches Beleuchtungssystem zumindest einen Leuchtstreifen mit Leuchtdioden und eine Steuereinrichtung, mit welcher die Leuchtdioden ansteuerbar sind, umfasst.

Die Kommunikation zwischen anderen Verkehrsteilnehmern und von Menschen gelenkten Fahrzeugen erfolgt grundsätzlich über Blickkontakt, Gesten oder visuelle/ auditive (Warn)Signale wie Lichthupe oder Hupe.

Die Beleuchtungsfunktionen von Fahrzeugen als sicherheitsrelevante Maßnahmen und als Kommunikationsmittel zur Kommunikation mit anderen Verkehrsteilnehmern wird zunehmend an Bedeutung gewinnen, wenn Fahrzeuge nicht mehr von einem Menschen gelenkt werden, sondern vollständig autonom oder teilweise autonom, z.B. über einen autonomen, den Fahrer entlastenden Selbstfahrmodus, agieren. Die Beleuchtungsfunktionen werden sich dann nicht mehr an der Wahrnehmung der menschlichen Verkehrsteilnehmer orientieren, sondern an den Anforderungen für technische Einrichtungen (Sensoren, Kamerasysteme, etc.) des selbstfahrenden Fahrzeugs. Diese technischen Einrichtungen können wünschenswerter Weise eine vorliegende Umfeldsituation zuverlässig erkennen und bewerten, sodass auf Grundlage der erfassten Situation, insbesondere einer Gefahrensituation, entsprechende Kommunikationssignale an die anderen Verkehrsteilnehmer wie Fußgänger, Radfahrer und nicht-autonome Fahrzeuge übermittelt werden. Eine besondere Herausforderung hinsichtlich des Einsatzes autonomer Fahrzeuge, stellen dabei auch Verkehrsteilnehmer dar, welche sich nicht aktiv auf den Verkehr konzentrieren oder eine Verkehrssituation falsch einschätzen, beispielsweise Fußgänger und Kinder. Diese Verkehrsteilnehmer können Fahrzeuge oder deren Beleuchtungsfunktionen leicht übersehen.

Der Begriff "selbstfahrendes Fahrzeug" (hierin auch als "autonomes Fahrzeug" bezeichnet) bezieht sich auf Fahrzeuge, insbesondere auf Kraftfahrzeuge (KFZ), die dazu eingerichtet sind, auch ohne Eingriff eines Fahrers, typischerweise Computer-gesteuert, bewegt werden zu können. Das selbstfahrende Fahrzeug kann beispielsweise vollständig autonom sein oder es kann ein Fahrzeug sein, das von einem aktiven Fahrer-betriebenen Fahrmodus zur Entlastung des Fahrers in einen autonomen Selbstfahrmodus umschaltbar ist. Das selbstfahrende Fahrzeug kann einspurig oder zweispurig, vorzugsweise zweispurig, sein. Beispielsweise kann es sich um einen Personenkraftwagen (PKW), einen Lastkraftwagen (LKW) oder um ein landwirtschaftliches Fahrzeug wie einen Traktor oder dergleichen handeln. Insbesondere handelt es sich bei dem selbstfahrenden Fahrzeug um einen PKW oder einen LKW.

Der Begriff "Verkehrsteilnehmer" bezieht sich auf alle sich typischerweise im Straßenverkehr befindlichen Objekte, wie andere Fahrzeuge und menschliche Verkehrsteilnehmer, wie Fußgänger oder Radfahrer.

Es ist eine Aufgabe der vorliegenden Erfindung, ein Beleuchtungssystem für ein Kraftfahrzeug bereitzustellen, dass adaptive Lichtsignalbotschaften an Verkehrsteilnehmer übermitteln kann, welche in jeder Winkelposition in der näheren Umgebung zu dem Kraftfahrzeug positioniert sein können.

Diese Aufgabe wird dadurch gelöst, dass ein Leuchtring horizontal um das Kraftfahrzeug umlaufend angeordnet ist, welcher Leuchtring aus dem zumindest einem Leuchtstreifen gebildet ist, wobei bei gleichzeitiger Einschaltung jeder Leuchtdiode des zumindest einen Leuchtstreifens der Leuchtring als optisch durchgehend leuchtender Leuchtring wahrnehmbar ist.

Unter dem Begriff "horizontal umlaufend" wird verstanden, dass sich der zumindest eine Leuchtstreifen sowohl über die beiden Längsseiten als auch die beiden Breitseiten erstreckt. Dabei muss der zumindest eine Leuchtstreifen nicht genau horizontal zur jeweiligen Fahrbahn, auf welcher sich das Kraftfahrzeug (im Betrieb) befindet, ausgerichtet sein, sondern kann auch Abstufungen aufweisen, zu deren Verbindung wiederum ein Leuchtstreifenabschnitt in einem Winkel zur Fahrbahn bzw. nicht mehr horizontal verläuft.

Bei Vorhandensein von zwei oder mehr Leuchtstreifen können die Leuchtstreifen zueinander einen physischen Abstand aufweisen, solange sie bei Einschaltung jeder Leuchtdiode (LED) einen als optisch durchgehend leuchtenden Leuchtring bilden.

In diesem Zusammenhang ist unter "durchgehend" zu verstehen, dass ein geschlossener Leuchtring gebildet wird, d.h. dass im eingeschalteten Zustand der LEDs der Leuchtring optisch durchgehend bzw. geschlossen horizontal umlaufend um das Kraftfahrzeug erscheint bzw. wahrnehmbar ist. Dabei können die Leuchtstreifen physisch einen Abstand aufweisen, wie oben erwähnt. Es kann jedoch auch vorgesehen sein, dass die Leuchtstreifen auch physisch einen durchgehenden bzw. geschlossenen Leuchtring bilden.

Unter "horizontal umlaufend" wird nicht verstanden, dass der zumindest eine Leuchtstreifen über die Bodenplatte und das Dach des Kraftfahrzeuges verläuft, was einer vertikal umlaufenden Anordnung entsprechen würde.

Der zumindest eine Leuchtstreifen kann beispielsweise Teil der Karosserie des Kraftfahrzeuges sein, beispielsweise als Ersatz für Zierleisten, die üblicherweise an den Kraftfahrzeugtüren unterhalb der Fenster vorhanden sind.

Der zumindest eine Leuchtstreifen und die Steuereinrichtung können über das bereits vorhandene Kraftfahrzeugbordnetz betrieben werden.

Statt einer Leuchtdiode können auch OLEDs, Laser oder Elektrolumineszenz verwendet werden.

Es kann vorgesehen sein, dass alle Leuchtdioden des zumindest einen Leuchtstreifens durch die Steuereinrichtung angesteuert und aktiviert sind, wenn sich das Kraftfahrzeug in dem selbstfahrenden Zustand befindet.

Weiters kann es günstig sein, wenn das Beleuchtungssystem zumindest eine Projektionsoptik, beispielsweise eine Linse, umfasst, welche dem zumindest einen Leuchtstreifen in Richtung Hauptabstrahlrichtung der Leuchtdioden nachgeschalten ist.

Durch die Projektionsoptik kann die Abstrahlcharakteristik des Leuchtstreifens bzw. der Leuchtdioden insofern verändert werden, dann der Leuchtstreifen beispielsweise breiter wirkt, was zu einer besseren Erkennung für die Verkehrsteilnehmer führt.

Unter "Hauptabstrahlrichtung" ist die Richtung zu verstehen, in der die Leuchtdiode bzw. die Leuchtdioden infolge ihrer Richtwirkung am stärksten bzw. am meisten Licht abstrahlt/ abstrahlen.

Vorteilhafterweise können zumindest zwei Leuchtstreifen, vorzugsweise zwölf Leuchtstreifen, vorgesehen sein.

Hierbei kann vorgesehen sein, wenn die Leuchtstreifen als physisch geschlossener Leuchtring um das Kraftfahrzeug angeordnet sind.

Mit Vorteil kann vorgesehen sein, wenn die Leuchtdioden zur Erzeugung von weißem und/ oder farbigem Licht vorgesehen sind.

Es kann günstig sein, wenn die Leuchtdioden unabhängig voneinander durch die Steuereinrichtung ansteuerbar sind.

Ferner kann es günstig sein, wenn die Leuchtdioden dimmbar sind.

Es kann vorgesehen sein, dass das Kraftfahrzeug zumindest eine Sensoreinrichtung umfasst, welche eingerichtet ist, in der Umgebung des Kraftfahrzeugs befindliche Verkehrsteilnehmer jeweils einzeln zu erfassen und Änderungen der Relativposition zwischen dem Kraftfahrzeug und den einzelnen Verkehrsteilnehmern zu berücksichtigen.

Dabei kann es vorteilhaft sein, wenn die zumindest eine Sensoreinrichtung eine bildsensorgestützte Kamera, ein Nahfeld-Infrarotsensor oder ein Ultraschallsensor ist.

Die zumindest eine Sensoreinrichtung zum einzelnen Erfassen anderer in der Fahrzeugumgebung befindlicher Verkehrsteilnehmer kann beispielsweise als bildsensorgestützte Kamera, Infrarotsensor und/oder Radarscanner realisiert sein. Darüber hinaus können auch LiDAR oder Ultraschallsysteme zum Einsatz kommen. Derartige Vorrichtungen sind aus dem Stand der Technik bekannt und können auch in Kombination miteinander eingesetzt werden, um die verschiedenen Vorteile zu nutzen. Die bildsensorgestützte Kamera kann die Funktionen einer normalen Kamera, einer Nachtsicht-Kamera und/oder einer Nebelsichtkamera umfassen, sodass bei allen Lichtverhältnissen und Witterungen eine zuverlässige und qualitativ ausreichende Erfassung der Fahrzeugumgebung und der beteiligten Verkehrsteilnehmer möglich ist. Es kann vorgesehen sein, dass die Kamera eine zusätzliche Infrarot-Kamerafunktion besitzt, um Menschen und Tiere auf Grundlage ihrer Körperwärme noch besser erfassen zu können.

Es kann vorgesehen sein, wenn die Sensoreinrichtung bei Erfassen zumindest eines Verkehrsteilnehmers ein Signal an die Steuereinrichtung übermittelt, sodass die Steuereinrichtung jene Leuchtdioden des zumindest einen Leuchtstreifens ansteuert, welche in einer festlegbaren Länge des zumindest einen Leuchtstreifens, beispielsweise in einer Länge von 20 bis 100 cm, dem zumindest einen erfassten Verkehrsteilnehmer am nächsten sind.

Es kann vorgesehen sein, dass die angesteuerten Leuchtdioden ein farbiges Licht, beispielweise grünes und/oder rotes Licht, abstrahlen.

Es kann ferner vorgesehen sein, dass die Lichtfarbe der von den Leuchtdioden erzeugten Lichtverteilung, die dem jeweils erfassten Verkehrsteilnehmer übermittelt wird, den Verkehrsteilnehmer darüber informiert, wie die Verkehrssituation durch das selbstfahrende Fahrzeug bewertet wird. Günstigerweise können hier Farben eingesetzt werden, die sich im Straßenverkehr als allgemein anerkannte Signale für gewisse Situationen durchgesetzt haben. Beispielsweise könnte die Farbe "Grün" dem Teilnehmer signalisieren, dass er von dem selbstfahrenden Fahrzeug erkannt wurde, die Situation daher im "grünen Bereich" liegt und der Teilnehmer keine Aktionen setzen muss. Die Farben "Gelb" oder "Orange" könnten dem Teilnehmer signalisieren, dass die Verkehrssituation gerade noch keine Gefahr birgt, dass aber eine Aktion des Verkehrsteilnehmers (z.B. stehenbleiben, abbremsen) erwartet wird. Die Farbe "Rot" könnte eine Gefahrensituation signalisieren, die sowohl seitens des Teilnehmers als auch seitens des selbstfahrenden Fahrzeugs Aktionen erfordert, um eine potentiell gefährliche Verkehrssituation oder einen Unfall zu verhindern.

Dabei kann es vorgesehen sein, dass der jeweils erfasste Verkehrsteilnehmer mittels einer Intensitätsmodulation der erzeugten Signallichtverteilung auf das selbstfahrende Fahrzeug aufmerksam gemacht wird. Die Intensitätsmodulation kann dabei Blinken, Blitzen, eine konstante Helligkeit mit überlagerten Blitzen oder eine Kombination davon umfassen. Die Intensitätsmodulation der erzeugten Signallichtverteilung stellt eine effiziente Maßnahme dar, um konkrete und unmittelbare Gefahren abwenden zu können.

Es kann auch vorgesehen sein, dass der Leuchtring dazu genutzt werden kann, Fahrtrichtungen anzuzeigen. Beispielsweise kann mit Hilfe der Leuchtdioden des Leuchtrings ein Wischeffekt bei einer beabsichtigen Vorwärts- bzw. Rückwärtsbewegung des Fahrzeuges erzeugt werden.

Nachfolgend wird die Erfindung anhand von beispielhaften Zeichnungen näher erläutert. Hierbei zeigt
Fig. 1A zeigt eine schematische Ansicht von oben eines beispielhaften Kraftfahrzeugs mit einem erfindungsgemäßen Beleuchtungssystem;
Fig. 1B zeigt eine schematische Ansicht von oben des Kraftfahrzeugs aus Fig. 1A, wobei das Beleuchtungssystem aktiviert ist und ein horizontal umlaufender und durchgehend leuchtender Leuchtring zu sehen ist;
Fig. 2 ein beispielhaftes Kraftfahrzeug in einer Ansicht von oben, wobei das Beleuchtungssystem an zwei erfasste Verkehrsteilnehmer adaptive Lichtsignalbotschaften übermittelt; und
Fig. 3 eine schematische Verkehrssituation mit einem Kraftfahrzeug aus Fig. 1A und einem Radfahrer als Verkehrsteilnehmer, wobei das Beleuchtungssystem eine adaptive Lichtsignalbotschaft an den Radfahrer übermittelt.

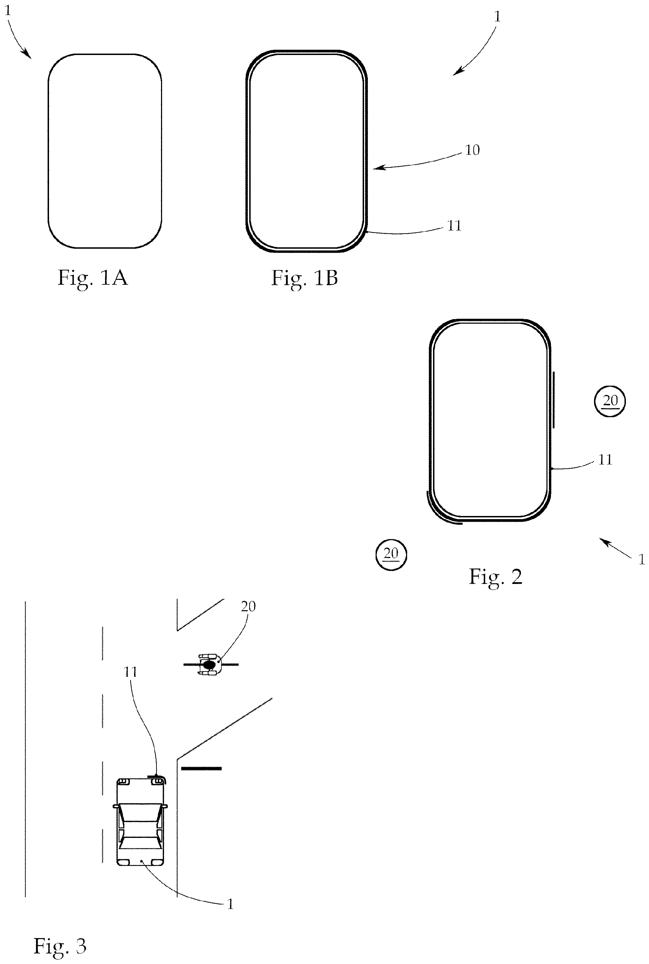

**Fig. 1A** und **Fig. 1B** zeigen eine schematische Draufsicht eines Kraftfahrzeugs **1**, welches in einem selbstfahrenden Zustand und/ oder in einem manuell steuerbaren Zustand betreibbar ist, wobei das Kraftfahrzeug **1** ein adaptives Beleuchtungssystem **10** zum Erzeugen von adaptiven Lichtsignalbotschaften an einzelne Verkehrsteilnehmer umfasst, welches Beleuchtungssystem **10** zwölf Leuchtstreifen **11** mit Leuchtdioden und eine Steuereinrichtung, mit welcher die Leuchtdioden ansteuerbar sind, umfasst, wobei der zumindest eine Leuchtstreifen **11** horizontal umlaufend um das Kraftfahrzeug **1** angeordnet ist.

Bei Einschaltung jeder vorhandenen Leuchtdiode der Leuchtstreifen **11**, sind diese als optisch durchgehend leuchtender Leuchtring wahrnehmbar, wobei alle Leuchtdioden des der Leuchtstreifen **11** durch die Steuereinrichtung angesteuert und aktiviert sind, wenn sich das Kraftfahrzeug **1** in dem selbstfahrenden Zustand befindet, was in **Fig. 1B** dargestellt ist.

Das Beleuchtungssystem **10** umfasst eine Projektionsoptik, beispielsweise eine Linse, welche jedem Leuchtstreifen **11** in Richtung Hauptabstrahlrichtung der Leuchtdioden nachgeschalten ist.

In **Fig. 2** ist das Kraftfahrzeug **1** aus den vorherigen Figuren in einer Ansicht von oben zu sehen, wobei das Beleuchtungssystem an zwei erfasste Verkehrsteilnehmer adaptive Lichtsignalbotschaften übermittelt. Hierbei umfasst das Kraftfahrzeug **1** eine Sensoreinrichtung, welche eingerichtet ist, in der Umgebung des Kraftfahrzeugs **1** befindliche Verkehrsteilnehmer **20** jeweils einzeln zu erfassen und Änderungen der Relativposition zwischen dem Kraftfahrzeug **1** und den einzelnen Verkehrsteilnehmern **20** zu berücksichtigen, wobei die Sensoreinrichtung bei Erfassen der Verkehrsteilnehmer **20** jeweils ein Signal an die Steuereinrichtung übermittelt, sodass die Steuereinrichtung jene Leuchtdioden der Leuchtstreifen **11** ansteuert bzw. aktiviert, welche in einer festlegbaren Länge, beispielsweise in einer Länge von 20 bis 100 cm, dem zumindest einen erfassten Verkehrsteilnehmer **20** am nächsten sind.

Hierbei sind die Leuchtdioden zur Erzeugung von weißem und/ oder farbigem Licht vorgesehen, wobei die Leuchtdioden unabhängig voneinander durch die Steuereinrichtung ansteuerbar und auch dimmbar sind. Beispielsweise können die von der Steuereinrichtung aufgrund des Signals der Sensoreinrichtung angesteuerten bzw. aktivierten Leuchtdioden grünes, oranges, gelbes oder rotes Licht emittieren, um den erfassten Verkehrsteilnehmern 20 zu signalisieren, dass diese von dem selbstfahrenden Fahrzeug **1** erkannt wurden, die Situation daher im "grünen Bereich" liegt und der Verkehrsteilnehmer **20** keine Aktionen setzen muss. Die Farben "Gelb" oder "Orange" könnten den Verkehrsteilnehmern **20** signalisieren, dass die Verkehrssituation gerade noch keine Gefahr birgt, dass aber eine Aktion des Verkehrsteilnehmers (z.B. stehenbleiben, abbremsen) erwartet wird. Die Farbe "Rot" könnte eine Gefahrensituation signalisieren, die sowohl seitens des Verkehrsteilnehmers als auch seitens des selbstfahrenden Fahrzeugs **1** Aktionen erfordert, um eine potentiell gefährliche Verkehrssituation oder einen Unfall zu verhindern.

Die Sensoreinrichtung kann beispielsweise eine bildsensorgestützte Kamera, ein Nahfeld-Infrarotsensor oder ein Ultraschallsensor sein.

**Fig. 3** zeigt eine mögliches Szenario einer Verkehrssituation, bei welcher das Kraftfahrzeug **1** aus den obigen Figuren eine Straße befährt und ein Radfahrer **20** - vom Kraftfahrzeug **1** aus in Vorwärtsfahrtrichtung gesehen - rechts vom Kraftfahrzeug **1** kommend von der Sensoreinrichtung erfasst wird. Die Sensoreinrichtung übermittelt daraufhin ein Signal an die Steuereinrichtung des Beleuchtungssystems, wobei über eine festlegbare Länge die Leuchtdioden der Leuchtstreifen **11**, welche dem Radfahrer **20** am nächsten sind, aktiviert werden, wie in **Fig. 3** zu sehen ist. Diese aktivierten Leuchtdioden emittierten in dieser Verkehrssituation beispielsweise rotes Licht, um dem Radfahrer **20** zu signalisieren, dass dieser stehenbleiben soll, um einen möglichen Unfall zu vermeiden. Hierbei kann das Kraftfahrzeug **1** sowohl in einem manuell steuerbaren Zustand als auch in einem selbstfahrenden Zustand sein, wobei in einem selbstfahrenden Zustand des Kraftfahrzeugs **1**, die übrigen Leuchtdioden der Leuchtstreifen ebenfalls aktiviert sind und weißes Licht emittieren, um anderen Verkehrsteilnehmern zu signalisieren, dass sich das Kraftfahrzeug **1** in einem selbstfahrenden Zustand befindet. Die Signalfarbe für die Anzeige des selbstfahrenden Zustands des Kraftfahrzeuges kann abseits von weißem Licht auch blaues bzw. türkises Licht sein.

### BEZUGSZEICHENLISTE

- Kraftfahrzeug...: 1
- Beleuchtungssystem...: 10
- Leuchtstreifen...: 11
- Verkehrsteilnehmer, Radfahrer...: 20

## Patentansprüche

1. Kraftfahrzeug (1), welches in einem selbstfahrenden Zustand betreibbar ist, wobei das Kraftfahrzeug (1) ein adaptives Beleuchtungssystem (10) zum Erzeugen von adaptiven Lichtsignalbotschaften an einzelne Verkehrsteilnehmer (20) umfasst, welches Beleuchtungssystem (10) zumindest einen Leuchtstreifen (11) mit Leuchtdioden und eine Steuereinrichtung, mit welcher die Leuchtdioden ansteuerbar sind, umfasst,
**dadurch gekennzeichnet, dass**
ein Leuchtring horizontal um das Kraftfahrzeug (1) umlaufend angeordnet ist, welcher Leuchtring aus dem zumindest einem Leuchtstreifen (11) gebildet ist, wobei bei gleichzeitiger Einschaltung jeder Leuchtdiode des zumindest einen Leuchtstreifens (11) der Leuchtring als optisch durchgehend leuchtender Leuchtring wahrnehmbar ist.

2. Kraftfahrzeug nach Anspruch 1, **dadurch gekennzeichnet, dass** alle Leuchtdioden des zumindest einen Leuchtstreifens (11) durch die Steuereinrichtung angesteuert und aktiviert sind, wenn sich das Kraftfahrzeug (1) in dem selbstfahrenden Zustand befindet.

3. Kraftfahrzeug nach Anspruch 1 oder 2, **dadurch gekennzeichnet, dass** das Beleuchtungssystem (10) zumindest eine Projektionsoptik, beispielsweise eine Linse, umfasst, welche dem zumindest einen Leuchtstreifen (11) in Richtung Hauptabstrahlrichtung der Leuchtdioden nachgeschalten ist.

4. Kraftfahrzeug nach einem der Ansprüche 1 bis 3, **dadurch gekennzeichnet, dass** zumindest zwei Leuchtstreifen (11), vorzugsweise zwölf Leuchtstreifen, vorgesehen sind.

5. Kraftfahrzeug nach Anspruch 4, **dadurch gekennzeichnet, dass** die Leuchtstreifen (11) als physisch geschlossener Leuchtring um das Kraftfahrzeug angeordnet sind.

6. Kraftfahrzeug nach einem der Ansprüche 1 bis 5, **dadurch gekennzeichnet, dass** die Leuchtdioden zur Erzeugung von weißem und/ oder farbigem Licht vorgesehen sind.

7. Kraftfahrzeug nach einem der Ansprüche 1 bis 6, **dadurch gekennzeichnet, dass** die Leuchtdioden unabhängig voneinander durch die Steuereinrichtung ansteuerbar sind.

8. Kraftfahrzeug nach einem der Ansprüche 1 bis 7, **dadurch gekennzeichnet, dass** die Leuchtdioden dimmbar sind.

9. Kraftfahrzeug nach einem der Ansprüche 1 bis 8, **dadurch gekennzeichnet, dass** das Kraftfahrzeug (1) zumindest eine Sensoreinrichtung umfasst, welche eingerichtet ist, in der Umgebung des Kraftfahrzeugs (1) befindliche Verkehrsteilnehmer (20) jeweils einzeln zu erfassen und Änderungen der Relativposition zwischen dem Kraftfahrzeug (1) und den einzelnen Verkehrsteilnehmern (20) zu berücksichtigen.

10. Kraftfahrzeug nach Anspruch 9, **dadurch gekennzeichnet, dass** die zumindest eine Sensoreinrichtung eine bildsensorgestützte Kamera, ein Nahfeld-Infrarotsensor oder ein Ultraschallsensor ist.

11. Kraftfahrzeug nach Anspruch 9 oder 10, **dadurch gekennzeichnet, dass** die Sensoreinrichtung bei Erfassen zumindest eines Verkehrsteilnehmers (20) ein Signal an die Steuereinrichtung übermittelt, sodass die Steuereinrichtung jene Leuchtdioden des zumindest einen Leuchtstreifens (11) ansteuert, welche in einer festlegbaren Länge des zumindest einen Leuchtstreifens (11), beispielsweise in einer Länge von 20 bis 100 cm, dem zumindest einen erfassten Verkehrsteilnehmer am nächsten sind.

12. Kraftfahrzeug nach Anspruch 11, **dadurch gekennzeichnet, dass** die angesteuerten Leuchtdioden ein farbiges Licht, beispielweise grünes und/oder rotes Licht, abstrahlen.
